# EUROPEAN PATENT APPLICATION

(11) **EP 1 489 528 A2**
(43) Date of publication of application: **22.12.2004**
(21) Application number: 04090243.9
(22) Date of filing: 19.06.2004
(51) Int. Cl.: G06F 17/30

(54) **URL retrieval method and system**

(30) Priority: 20.06.2003 JP 2003176364
(71) Applicant: NEC Corporation, Minato-ku, Tokyo 108-01 (JP)
(72) Inventor: Iwama, Madoka, Minato-ku Tokyo (JP)
(74) Representative: Patentanwälte Wenzel & Kalkoff

(57) **Abstract**

In a URL retrieval system and a URL retrieval method, a user is not required to assume a keyword for information to be accessed and in which even when many URL are obtained through a search, the user need not select desired URL therefrom. A proxy search server (200) creates a search expression using information from a user terminal (100). A search engine server (300) extracts URL according to the search expression from the search server (200). If the number of the extracted URL exceeds a predetermined value, the search engine server (300) sends information indicating for each URL a hierarchic level to which the URL belongs via the proxy engine server to the terminal for user selection. From the extracted URL, the engine server (300) obtains URL belonging to a hierarchic level selected by the user. If the number of the URL does not exceed a predetermined value, the engine server (300) sends the URL as a retrieval result via the proxy engine server (200) to the user terminal (100) for user selection.

## Description

### BACKGROUND OF THE INVENTION

### Field of the Invention

The invention relates to a system for and a method of retrieving a uniform resource locator (URL) of information opened to the public on the internet, and in particular, to a URL retrieval system and a server and a URL retrieval method for use with the system in which the user is not required to use a keyword to retrieve a URL.

### Description of the Prior Art

As a result of recent development of communication infrastructure, the number of users of the internet is increasing. In association therewith, various information has been opened to the public on the internet.

On the internet, a location or an address of such information is identified by a uniform resource locator (URL). Therefore, to access information open to the public on the internet, the user is required to input a URL of the information from an information processing terminal. That is, when the URL is not appropriately known, the user cannot access the information.

As a method to obtain a URL of desired information, a keyword search or retrieval has been broadly adopted. This search employs a server called "search engine" including a database having stored uniform resource locators (URL) and keywords with a correspondence established therebetween. In operation, a keyword is sent from a user terminal to the search engine. The engine extracts a URL associated with the keyword from the database and notifies the URL to the user terminal. Resultantly, the user acquires the URL corresponding to the keyword.

To conduct the keyword search, it is necessary for the user to set and input a keyword associated with the target information. This is difficult for users other than experienced users versed in keyword searches. However, beginners or users not familiar with keyword searches cannot easily set and/or input an appropriate keyword for the information in many cases.

When a keyword not suitable for the information is used in the keyword search, a URL for the requiring information cannot be obtained from the database of the search engine. Therefore, the URL obtained by the user as a result of the search is not associated with the desired information.

In this situation, the user cannot access the information. In some cases, the user possibly makes a wrong decision that the information has not been opened to the public on the network.

Conventional techniques for the user to retrieve a URL without selecting or assuming a keyword have been described in, for example, Japanese Patent Laid-Open No. 2002-297648 entitles "Information Retrieval Apparatus, Information Retrieval Program, and Recording Medium" and Japanese Patent Laid-Open No. 2003-76711 entitles "Information Retrieval Method, Information Retrieval System, and Program Using E-Mail".

According to Japanese Patent Laid-Open No. 2002-297648, in an operation to retrieve a URL of information related to an image, image data is uploaded from a user terminal to an image search engine. The engine extracts data of a feature such as a contour of the image to determine characteristics of the image to obtain keywords associated with the image. The image engine then transmits the keywords to the keyword search engine to achieve the keyword search using the keywords.

By use of the technique described in Japanese Patent Laid-Open No. 2003-76711, a user of a user terminal creates in a desired format a sentence or a text associated with information to be accessed and then sends the text by e-mail to a mail address specified to execute a retrieval for the information. When the mail is received, the retrieval engine extracts a keyword from the text and then executes a keyword search for the information.

According to each of the techniques described above, since the user can retrieve a URL without setting and /or inputting a keyword for the target information, any user not familiar with the keyword search can easily access desired information.

However, since quite a large number of information items are open to the public on the internet, many uniform resource locators may be extracted by the search engine in some cases depending on the setting of search conditions.

In the articles described above, such a case has not been considered. When the user receives a large number of uniform resource locators as a result of the keyword search, the user is required to extract some locators therefrom for the information to be accessed.

### SUMMARY OF THE INVENTION

It is therefore an object of the invention, with the intention to solve the problem, to provide a URL retrieval system and a URL retrieval method in which a user of a user terminal is not required to assume a keyword associated with information to be accessed and in which even when a large number of uniform resource locators are obtained as a result of the keyword search, the user need not select some locators therefrom for the target information.

In accordance with the invention, there is provided a uniform resource locator (URL) retrieval system including a user terminal capable of communicating information via an internet, a URL database storing, in a hierarchic configuration, URL indicating locations of information opened to the public on the internet and keywords of the respective URL with a correspondence established between the URL and the keywords; a searching unit for extracting, from the URL stored in the URL database, a URL matching a search expression; a server for requesting a retrieval of URL to the searching unit in response to a request from the user terminal and notifying a result of the retrieval to the user terminal; and internet means connecting the user terminal, the URL database, the searching unit, and the server to each other. The user terminal includes a unit for transmitting information for a search expression to the server and a unit for requesting the server to notify URL associated with the information as a result of a retrieval, the number of the URL being equal to or less than a maximum number. The server includes a unit for extracting keywords from the information received from the user terminal and creating a search expression using the keywords, a unit for requesting the searching unit to retrieve URL matching the search expression, a unit for sending information indicating the maximum number to the searching unit, a unit for requesting the user terminal to select at least one of items of a hierarchic level indicated by hierarchic level information received from the searching unit, a unit for transmitting to the searching unit hierarchic level selection information indicating the hierarchic level selected by a user operating the user terminal, and a unit for notifying a retrieval result from the searching unit to the user terminal. The searching unit includes a unit for creating, when the number of URL extracted according to the search expression received from the server exceeds the maximum number, the hierarchic level information indicating for each of the URL a hierarchic level to which the URL belongs and transmitting the hierarchic level information to the server and a unit for selecting, from the URL extracted according to the search expression received from the server, URL belonging to the hierarchic level indicated by the hierarchic level selection information.

In accordance with one aspect of the invention, the searching unit transmits again hierarchic level information to the server when the number of the URL belonging to the hierarchic level indicated by the hierarchic level selection information exceeds the maximum number. It is also desirable that the server notifies the search expression together with the result of the retrieval to the user terminal. Additionally, it is favorable that the server further includes a storage having stored information indicating a hierarchic configuration of the URL database and when a keyword matching a name of a highest hierarchic level of the URL database is included as a single item of an or condition in the search expression, the server removes the keyword from the search expression. Moreover, it is desirably that the server further includes an audio recognizer unit for converting audio data into character-string data. When the information for a search expression is received as voice data from the user terminal, the audio recognizer unit converts the audio data into character-string data and then the server extracts keywords from the information. In addition, it is favorable that the server further includes an image recognizer unit for converting image data into character-string data. When the information for a search expression is received as image data from the user terminal, the image recognizer unit converts the image data into character-string data and then the server extracts keywords from the information.

To achieve the object above, there is provided in accordance with one aspect of the invention a server for use with a URL retrieval connected via an internet to a user terminal for requesting a retrieval of URL to the searching unit in response to a request from the user terminal and notifying a result of the retrieval to the user terminal. The server includes a URL database storing, in a hierarchic configuration, URL indicating locations of information opened to the public on the internet and keywords of the respective URL with a correspondence established between the URL and the keywords; a unit for receiving, from the user terminal, information for a search expression and a maximum number associated with the information; a unit for extracting keywords from the information received from the user terminal and creating a search expression using the keywords; a search unit for extracting, from the URL stored in the URL database, URL matching the search matching the search expression; a unit for creating, when the number of URL extracted by the search unit according to the search expression exceeds the maximum number, hierarchic level information indicating for each of the URL a hierarchic level to which the URL belongs; a unit for requesting the user terminal to select at least one of items of a hierarchic level indicated by hierarchic level information; a unit for obtaining from the user terminal hierarchic level selection information indicating the hierarchic level selected by a user operating the user terminal; a unit for selecting, from the URL extracted according to the search expression received from the server, URL belonging to the hierarchic level indicated by the hierarchic level selection information; and a unit for notifying, when the number of URL extracted by the search unit according to the search expression is equal to or less than the maximum number, the URL extracted by the search unit as a result of the retrieval to the user terminal and notifying, when the number of URL extracted by the search unit according to the search expression exceeds the maximum number, the URL belonging to the hierarchic level indicated by the hierarchic level selection information as a result of the retrieval to the user terminal.

It is favorable that when the number of the URL belonging to the hierarchic level indicated by the hierarchic level selection information exceeds the maximum number, the server requests the user to select at least one of items of a hierarchic level indicated again by hierarchic level information. Also, the server desirably notifies the search expression together with the result of the retrieval to the user terminal. It is favorable that the server further includes a storage unit having stored information indicating a hierarchic configuration of the URL database. When a keyword matching a name of a highest hierarchic level of the URL database is included as a single item of an or condition in the search expression, the server removes the keyword from the search expression. Desirably, the server further includes an audio recognizer unit for converting audio data into character-string data. When the information for a search expression is received as voice data from the user terminal, the audio recognizer unit converts the audio data into character-string data and then the server extracts keywords from the information. Desirably, the server further includes an image recognizer unit for converting image data into character-string data. When the information for a search expression is received as image data from the user terminal, the image recognizer unit converts the audio data into character-string data and then the server extracts keywords from the information.

To achieve the object in accordance with one aspect of the invention, there is provided a URL retrieval method for use with a system including a user terminal capable of communicating information via an internet, a URL database storing, in a hierarchic configuration, URL indicating locations of information opened to the public on the internet and keywords of the respective URL with a correspondence established between the URL and the keywords, a searching unit for extracting, from the URL stored in the URL database, URL matching a search expression; a server for requesting a retrieval of URL to the searching unit in response to a request from the user terminal and notifying a result of the retrieval to the user terminal, and an internet connecting the user terminal, the URL database, the searching unit, and the server to each other. The method includes the steps of transmitting information for a search expression from the user terminal to the server; requesting, by the user terminal, the server to notify URL associated with the information as a result of a retrieval, the number of the URL being equal to or less than a maximum number; extracting, by the server, keywords from the information received from the user terminal and creating a search expression using the keywords; requesting, by the server, the searching unit to retrieve URL matching the search expression; sending, by the server, information indicating the maximum number to the searching unit; extracting by the searching unit, from the URL stored in the URL database, URL matching the search expression received from the server; making a check by the searching unit to determine whether or not the number of the URL extracted according to the search expression exceeds the maximum number; creating by the searching unit, when the number of URL extracted according to the search expression received from the server exceeds the maximum number, hierarchic level information indicating for each of the URL a hierarchic level to which the URL belongs and transmitting the hierarchic level information to the server; requesting, by the server, the user terminal to select at least one of items of a hierarchic level indicated by the hierarchic level information received from the searching unit; transmitting, by the server to the searching unit, hierarchic level selection information indicating the hierarchic level selected by the user terminal; selecting by the searching unit, from the URL extracted according to the search expression received from the server, URL belonging to the hierarchic level indicated by the hierarchic level selection information; sending by the searching unit the URL of which the number is equal to or less than the maximum number as a result of the retrieval to the server; and notifying by the server the result of the retrieval to the user terminal.

It is desirable that the URL retrieval method further includes the step of transmitting by the searching unit again hierarchic level information to the server when the number of the URL belonging to the hierarchic level indicated by the hierarchic level selection information exceeds the maximum number. Favorably, the URL retrieval method further includes the step of notifying by the server the search expression together with the result of the retrieval to the user terminal. It is desirable that the server further includes a storage having stored information indicating a hierarchic configuration of the URL database. The method further includes the step of removing by the server, when a keyword matching a name of a highest hierarchic level of the URL database is included as a single item of an or condition in the search expression, the keyword from the search expression. Favorably, the server further includes an audio recognizer unit for converting audio data into character-string data. The method further includes the step of converting by the audio recognizer unit, when the information for a search expression is received as voice data from the user terminal, the audio data into character-string data and extracting thereafter the keywords from the information. Moreover, it is desirable that the server further includes an image recognizer unit for converting image data into character-string data. The method further includes the step of converting by the image recognizer unit, when the information for a search expression is received as image data from the user terminal, the image data into character-string data and extracting thereafter the keywords from the information.

### BRIEF DESCRIPTION OF THE DRAWINGS

Further objects and features of the invention will become apparent from the consideration of the following detailed description taken in conjunction with the accompanying drawings in which:
- Fig. 1: is a schematic block diagram showing a first embodiment of a URL retrieval system in accordance with the invention;
- Fig. 2: is a block diagram showing a configuration of a user terminal in the first embodiment;
- Fig. 3: is a block diagram showing a configuration of a proxy search server in the first embodiment;
- Fig. 4: is a block diagram showing a configuration of a search engine server in the first embodiment;
- Fig. 5: is a block diagram of the relationship between genres and categories having a hierarchic configuration in a URL database;
- Fig. 6: is a block diagram of the state in which information items indicating uniform resource locators and keywords are stored with a relationship established therebetween;
- Fig. 7: is a flowchart showing operation for the URL retrieval system to retrieve a URL in the first embodiment;
- Fig. 8: is a sequence diagram showing a specific operation sequence of the URL retrieval system in the first embodiment;
- Fig. 9: is a block diagram showing a configuration of a second embodiment of a user terminal in accordance with the invention;
- Fig. 10: is a block diagram showing a configuration of a proxy search server in the second embodiment;
- Fig. 11: is a flowchart showing operation for the URL retrieval system to retrieve a URL in the second embodiment;
- Fig. 12: is a flowchart showing another operation for the URL retrieval system to retrieve a URL in the second embodiment;
- Fig. 13: is a flowchart showing still another operation for the URL retrieval system to retrieve a URL in the second embodiment;
- Fig. 14: is a block diagram showing a configuration of a third embodiment of a user terminal;
- Fig. 15: is a block diagram showing a configuration of a proxy search server in the third embodiment;
- Fig. 16: is a flowchart showing operation for the URL retrieval system to retrieve a URL in the third embodiment;
- Fig. 17: is a block diagram showing a configuration of a fourth embodiment of a user terminal in accordance with the invention;
- Fig. 18: is a block diagram showing a configuration of a proxy search server in the fourth embodiment;
- Fig. 19: is a flowchart showing operation for the URL retrieval system to retrieve a URL in the fourth embodiment;
- Fig. 20: is a block diagram showing a configuration of a proxy search server in a fifth embodiment;
- Fig. 21: is a flowchart showing operation for the URL retrieval system to retrieve a URL in the fifth embodiment;
- Fig. 22: is a block diagram showing a configuration of a proxy search server in a sixth embodiment in accordance with the invention; and
- Fig. 23: is a flowchart showing operation for the URL retrieval system to retrieve a URL in the sixth embodiment.

### DESCRIPTION OF THE EMBODIMENTS

### First embodiment

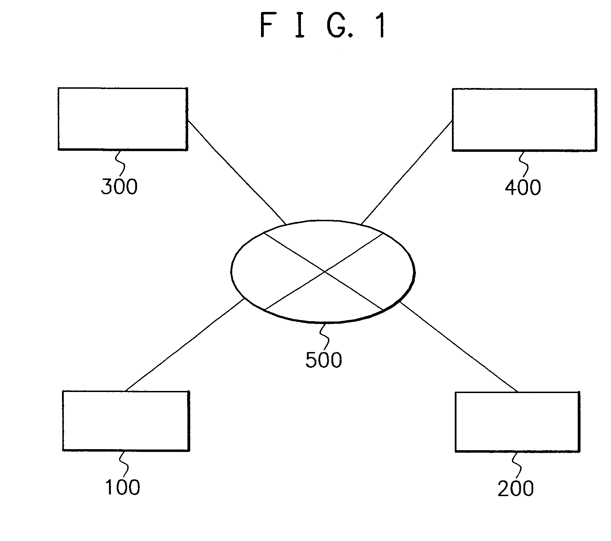

Fig. 1 shows the URL retrieval system, which includes a user terminal 100, a proxy search server 200, and a search engine server 300, an internet server 400, and internet means 500 connecting the constituent components to each other.

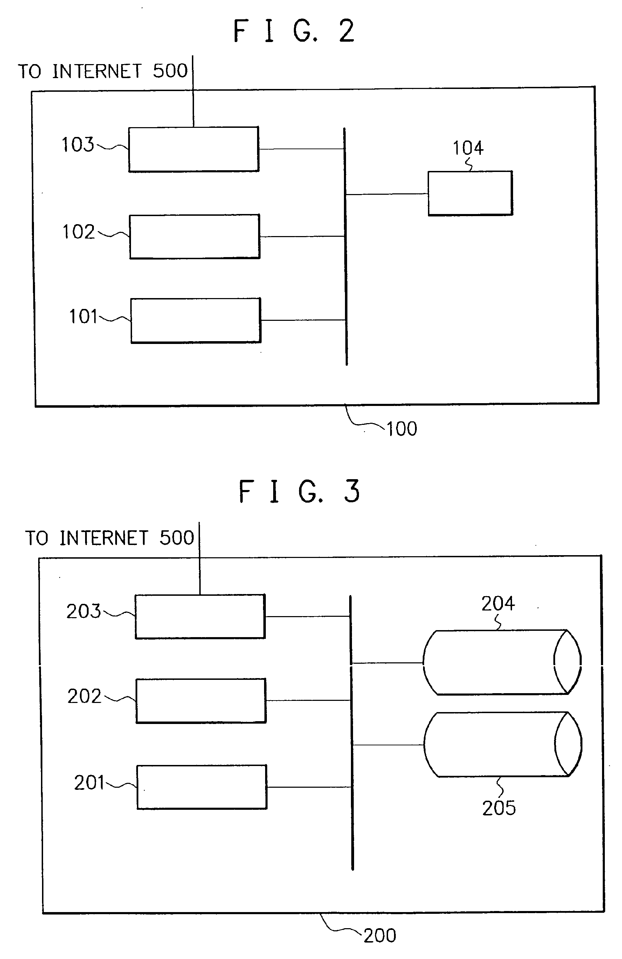

Fig. 2 shows an exemplified configuration of the user terminal 100, which is an information processor including a function to communicate information via the internet 500 and includes a control section 101, an operating section 102, a transceiver section 103, and a display 104.

The controller 101 is a functional section to control operation of each constituent component of the user terminal 100. The operating section 102 is an interface for the user to input information to the terminal 100 and includes a keyboard, a pointing device, and/or a touch panel. The transceiver 103 has a function to communicate information via the network 500 and executes processing such as modulation or coding of a signal to be sent to the network 500 and demodulation or decoding of a signal received from the network 500. The display section 104 is a device to present a message to the user and includes, for example, a display and a speaker.

Fig. 3 shows an exemplified configuration of the proxy search server 200, which analyzes information received from the user terminal 100, extracts keywords therefrom, and issues a request for a URL search using the keywords to the search engine server 300. Server 200 includes a controller 201, a text analyzer 202, a transceiver 203, a dictionary data storage 204, and a user information storage 205.

The control unit 201 is a functional section to control the over all operation of the constitutional sections of the proxy search server 200. The text analyzer 202 analyzes a text or a character string to extract keywords therefrom and generates a search expression using the keywords. The transceiver 203 is a functional module to communicate information via the network 500. The dictionary data storage 204 stores data, i.e., dictionary data for the text analyzer 202 to analyze a text. The user information storage 205 stores information to authenticate a user of the user terminal 100.

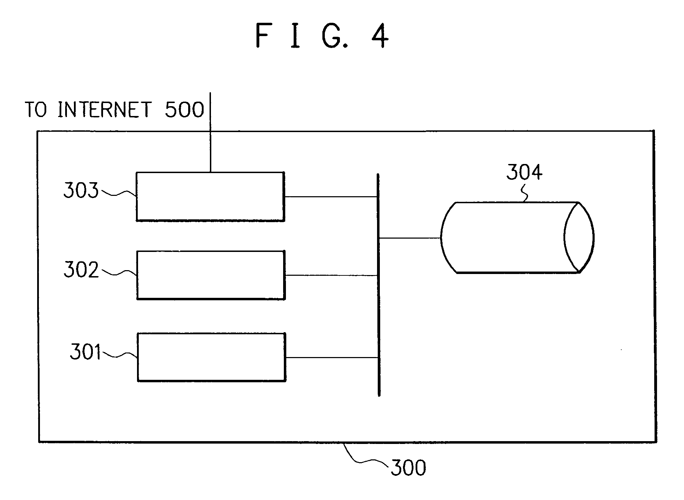

Fig. 4 shows an exemplified construction of the search engine server 300, which includes a control section 301, a search processing section 302, a transceiver section 303, and a URL database 304 (as described in the scope of claims).

The controller 301 is a functional unit to control the overall operation of the constituent components of the search engine server 300. The search section 302 executes processing to extract from the URL database 304 uniform resource locators associated with a keyword obtained from the proxy search server 200. The URL database 304 stores the locators and keywords in a hierarchic layout with a relationship established there-between.

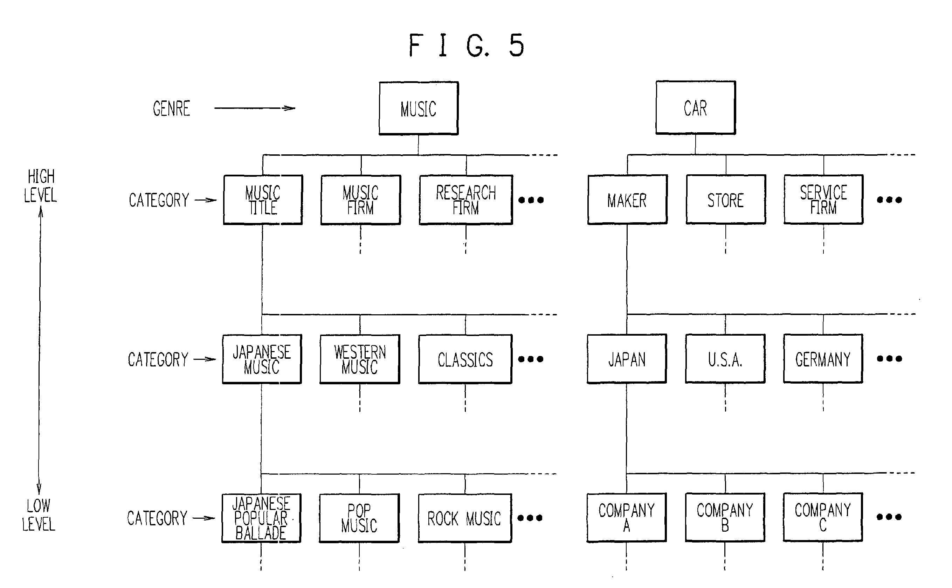

Fig. 5 shows a layout of information items classified in hierarchic level stored in the URL database 304. The information is classified into genres such as "music" and "car" in the database 304. Each genre is subdivided into categories including "music title" and "maker". Some categories are each further classified into sub-categories. Therefore, the information items of each genre are configured in a hierarchic tree layout.

In this example, the largest hierarchic level including "music" and "car" is defined as "genre", and the classification in the genre is defined as "category". When a category includes subcategories, the category is called "lower category" and the subcategory is called "higher category". In the example shown in Fig. 5, a category "music title" includes a category "Japanese music" and hence "music title" is a higher category and "Japanese music" is a lower category.

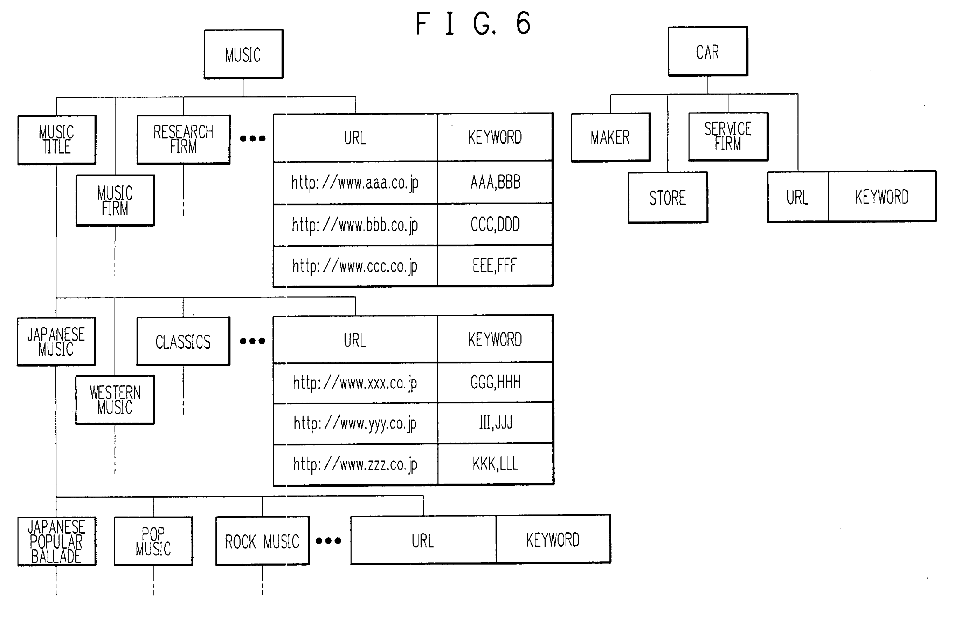

As can be seen from Fig. 6, information of each URL is classified into the category not including any lower category associated with the URL in the genre of the information. For example, a URL of http://www.xxx.co.jp for information regarding music titles not belonging to, for example, "Japanese music", "western music", "classics", etc. is stored in a category "music title" of a genre "music".

Next, description will be given of operation of the URL retrieval system.

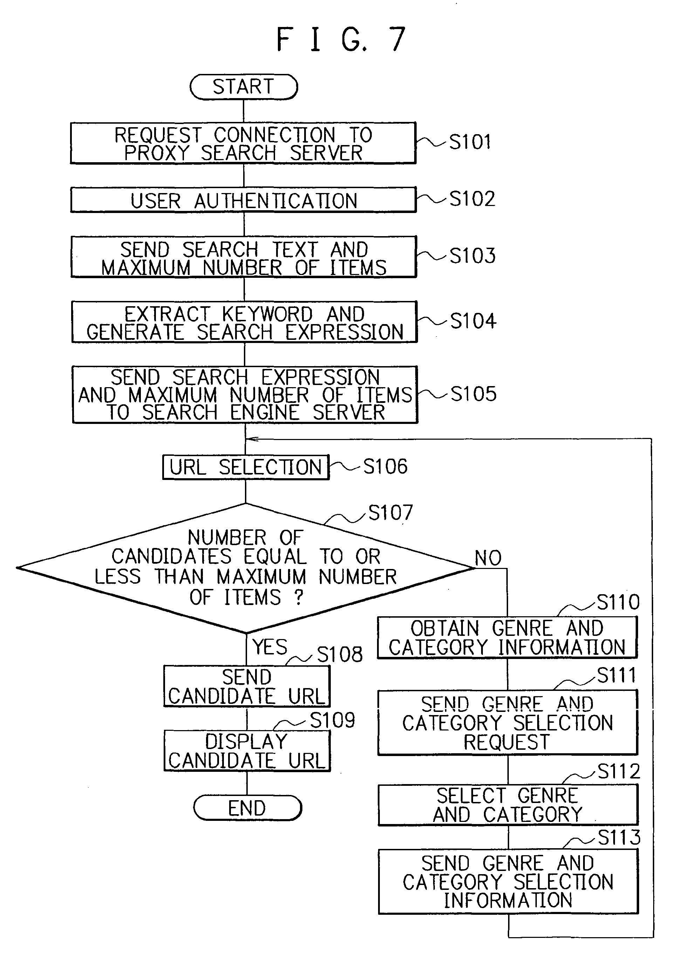

Fig. 7 shows a flow of operation in which a user of the user terminal 100 achieves a URL retrieval using the proxy search server 200.

When the user of the terminal 100 conducts operation from the operator's unit 103, the controller 101 creates a connection request and sends the request from the transceiver 103 via the internet 500 to the proxy search server 200 (step S101).

Having received the connection request from the terminal 100, the server 200 requests the terminal 100 to transmit information of authentication. The information may be a combination of a user identifier and a password. Moreover the information may be, for example, information obtained from information used in biometrical or biometrics authentication such as a finger print, a voice-print, and an iris. When the authentication information is requested from the server 200, the controller 101 of the terminal 100 displays a message on the display 104 requesting the user to input authentication information.

When the user operates the operating section 103 of the terminal 100 to input information of authentication, the controller 101 transmits the information via the internet 500 to the proxy search server 200.

When the server 200 receives the information from the user terminal 100, the control section 201 makes a check to determine whether or not the user information storage 205 contains information matching the information of authentication (step S102). If the storage 205 stores the information, the controller 201 allows the terminal 100 to be connected to the server 200. Otherwise, the controller 201 terminates the processing by rejecting the request for connection to the terminal 100. In this case, it is also possible that the control section 201 issues a request to the user terminal 100 to again send authentication information thereto.

When the connection to the proxy search server 200 is established, the controller 101 of the terminal 100 displays a message on the display 104 to request the user to input a text (a search text) for the target information and the maximum number of items to be extracted. When the user inputs the text and the maximum number of items from the operator's console 102, the controller 101 transmits these items to the server 200 (step S103).

When the server 200 receives the information items from the user terminal 100, the controller 201 transfers the text to the text analyzer section 202. The text analyzer 202 divides the text into morphological elements by referring to dictionary data in the dictionary data storage 204 to extract items such as nouns, verbs, and adjectives as keywords. When the text includes a word or a clause indicating "or" or "alternatively", the analyzer 202 generates a search expression in which an or condition is constructed using parts of the text before and after the word or clause. When the text includes a word or a clause indicating "and", the analyzer 202 generates a search expression. The expression includes an and condition configured using parts of the text before and after the word or clause (step S104).

When the search text received from the user terminal 100 is, for example, "good Japanese pancake restaurant in Tokyo or Yokohama", the text analyzer 202 extracts "Tokyo", "Yokohama", "good", and " Japanese pancake restaurant" and generates a search expression including an or condition using "Tokyo" and "Yokohama". The expression is ((Tokyo+Yokohama) x good x Japanese pancake restaurant). In the expression, "+" indicates an or condition and "x" indicates an and condition.

When the text analyzer 202 extracts keywords from the search text and produces a search expression, the controller 201 transmits the search text and information regarding the maximum number of items for extraction via the internet 500 to the search engine server 300 (step S105).

When the server 300 receives the search text and information regarding the maximum number from the proxy search server 200, the controller 301 passes the search expression to the search processor 302. The processor 302 selects items suitable for the search expression from the uniform resource locators stored in the URL database 304 (step S106).

When such a suitable URL is absent from the database 304, the control unit 301 sends an inquiry request to another information processor or the internet server 400 connected via internet 500 to the search engine server 300 to obtain a URL suitable for the search expression.

When the number of uniform resource locators selected by the search processor 302 is equal to or less than the maximum number of items (yes in step S107), the controller 301 sends the locators via the internet 500 to the proxy search server 200 (step S108). Having received the locators from the server 300, the server 200 transmits the locators via the internet to the user terminal 100. When the terminal receives the locators from the server 200, the controller 101 displays the uniform resource locators on the display 104 (step S109).

On the other hand, when the number of URL selected by the search processor 302 exceeds the maximum number of items (no in step S107), the controller 301 obtains a higher category or genre of each URL (step S 110). In the example of Fig. 6, if the URL is http://www.yyy.co.jp, the controller 301 attains information indicating a category "music title" associated with the URL. If the URL is http://www.bbb.co.jp, the control unit 301 attains information designating a category "music" to which the URL belongs. The controller 301 transmits the information, i.e., genre and category information indicating the genre and category associated with the URL to the proxy search server 200.

When the server 200 receives the information from the search server 300, the controller 201 creates a request, i.e., a genre and category selection request to select a desired number of items of the genres or categories from the received information. The controller 201 sends the request together with the genre and category information via the transceiver 203 to the user terminal 100 (step S111).

When the terminal 100 receives the genre and category information and the genre and category selection request from the server 200, the controller 101 presents a message on the display section 104. The message requests the user to select a desired number of genres or categories from the genres and categories indicated by the genre and category information.

When the user operates the operating section 102 to select genres or categories (step S 112), information indicating the selected genres or categories, namely, genre and category selection information is sent to the proxy search server 200 (step S113). When the transceiver 203 of the server 200 receives the information from the terminal 100, the controller 201 transmits the information to the search engine server 300.

When the server 300 receives the information from the proxy search server 200, the controller 301 notifies the information to the search processor 30. The processor 30 extracts, from the uniform resource locators obtained through the keyword search, URL belonging to the genres or categories indicated by the information (step S 106). If the number of URL extracted as a result is equal to or less than the maximum number of items (yes in step S107), the controller 301 delivers to the proxy search server 200 the URL extracted by the search processor 302 according to the genre and category selection information (step S108).

When the server 200 receives URL from the search engine server 300, the controller 201 sends the URL to the user terminal 100. When the terminal receives the URL from the server 200, the controller displays the URL on the display 104 (step S109).

If the number of URL extracted by the search processing section 302 according to the genre and category selection information exceeds the maximum number of items (no in step S107), the controller 301 delivers the genre and category selection information again to the proxy search server 200 to request selection of genres or categories (steps S 110 and S111). The controller 301 repeatedly executes the processing of steps S 106 to S 113 in a similar way until the number of URL extracted by the search processor 302 becomes less than or equal to the maximum number of items.

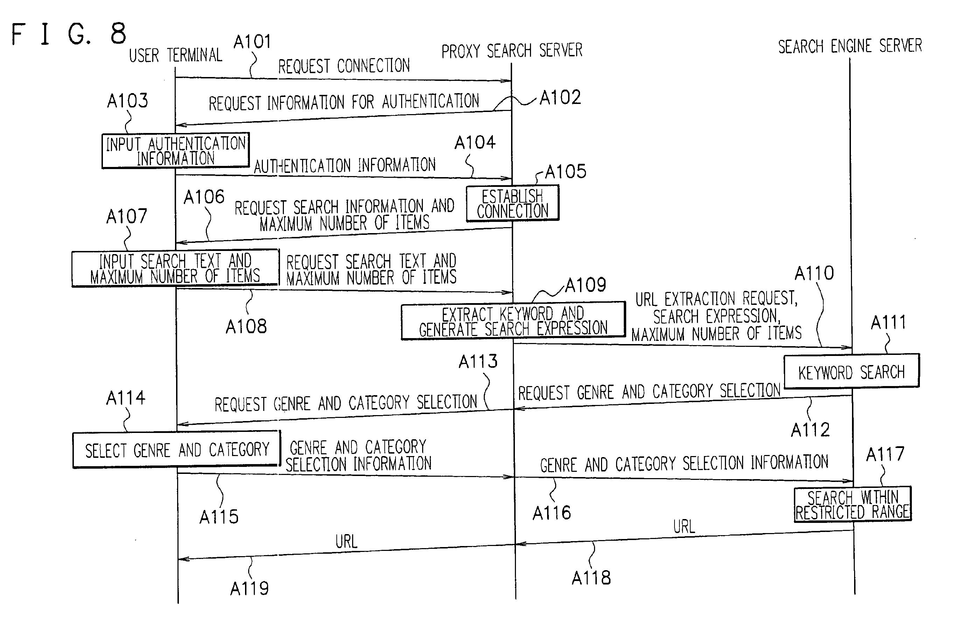

Fig. 8 shows a specific sequence of operation of the URL retrieval system in the embodiment. It is assumed in this sequence that the person or the user desiring to use the URL system is a qualified person having a right to use the system.

According to an input operation conducted by the user, the terminal 100 delivers a connection request to the proxy search server 200 (A101). When the request is received from the terminal 100, the server 200 requests the terminal 100 to send information for authentication. In the authentication, a check is made to determine whether or not the user is qualified to use the system (A102). When the user inputs authentication information from the terminal 100 (A103), the terminal 100 sends the information to the server 200 (A 104). Having received the information from the terminal 100, the server 200 authenticates the user according to user information stored in the user information storage 205 and establishes connection to the terminal 100 (A105).

After establishing the connection to the terminal 100, the server 200 requests the terminal 100 to send search information, i.e., a search text to create a search expression and information indicating the maximum number of items for the search (A106). When the user inputs a search text and the maximum number of items from the terminal 100, the terminal 100 transmits the information to the proxy search server 200 (A 108).

When the information indicating the search text and information designating the maximum number of items are received from the terminal 100, the server 200 analyzes the search text to extract keywords and creates a search expression (A 109). The server 200 delivers a URL extraction request together with the search expression and the information of the maximum number of items to the search engine server 300 (A110). When the request is received, the server 300 makes a search through information in the URL database 304 according to the search expression to extract URL matching the expression (A111). Assume in this case that the number of obtained URL exceeds the maximum number of items.

Since the number of URL thus detected exceeds the maximum number of items, the server 300 generates information of genres and categories to which the uniform resource locators belong and delivers information requesting selection of genres and categories to the proxy search server 200 (A112). On receiving the information, the server 200 transmits the information to the terminal 100 (A113).

When the user operates the terminal 100 to select genres and categories (A114), the terminal 100 sends to the server 200 information, i.e., genre and category selection information indicating genres and categories selected by the user (A115). When the information is received, the server 200 transmits the information to the search engine serve 300 (A116).

Having received the information, the server 300 selects, from the URL extracted as a result of the keyword search, uniform resource locators belonging to the genres and categories specified by the information (A117). It is assumed in this case that the number of URL selected according to the information is equal to or less than the maximum number of items for selection.

After the number of URL is lowered to be equal to or less than the maximum number, the server 300 delivers the locators selected as above to the server 200 (A 118). When the locators are received from the server 300, the server 200 transmits the locators to the terminal 100 (A119).

Of the uniform resource locators satisfying the search expression created using the keywords selected from the search text, only the uniform resource locators belonging the genres and categories selected by the user are notified as a search result to the terminal 100.

In the URL retrieval system according to the embodiment, the user is not required to assume a keyword associated with information to be accessed. In addition, even when many URL are selected by the search, it is not necessary for the user to select, from the URL obtained as a result of the search, uniform resource locators related to the information. Consequently, any user not versed in the search and retrieval operation can easily attain URL associated with information to be accessed.

### Second embodiment

Description will now be given of a second embodiment of the invention. As in the first embodiment, the URL retrieval system includes user terminal 100, proxy search server 200, search engine server 300, and internet 500 to connect the constituent components to each other.

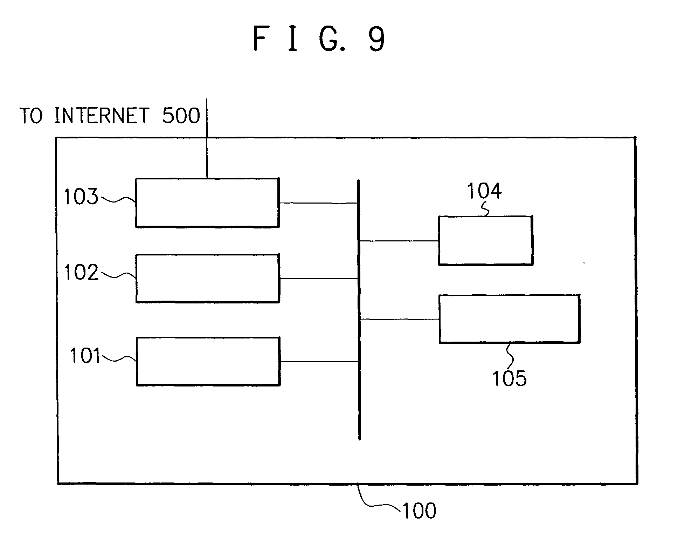

Fig. 9 shows a configuration of the user terminal 100 arranged in the second embodiment. The terminal 100 includes a voice or audio input section 105 in addition to the components of the first embodiment. The section 105 includes a converter element to convert sound and voice from the user into an electric signal, i.e., an audio signal.

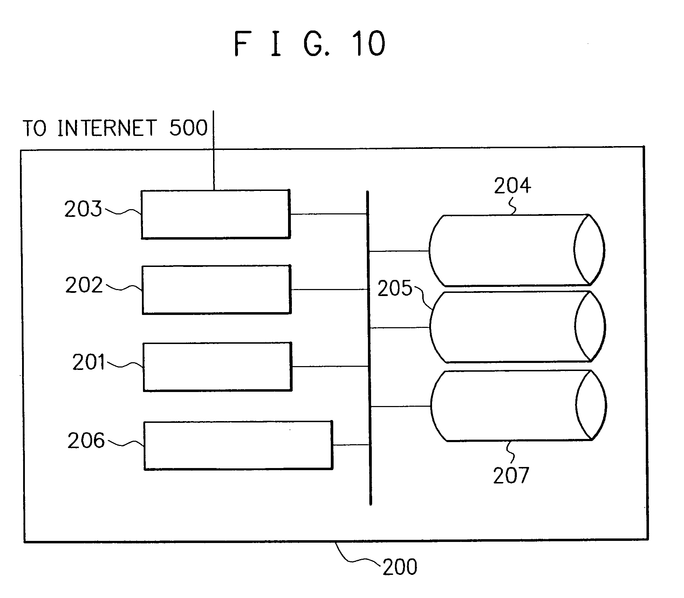

Fig. 10 shows the proxy search server 200 of the second embodiment. The embodiment is almost the same as the first embodiment excepting that a voice or audio recognizing section 206 and a voice or audio dictionary 207 are additionally disposed.

The dictionary 207 stores information of voice or audio of morphological elements. Using the information of voice and sound in the dictionary 207, the voice recognizer 206 analyzes and converts an audio signal into data including a character string.

The search engine server 300 of the second embodiment is substantially equal to that of the first embodiment.

Next, operation of the URL retrieval system will be described.

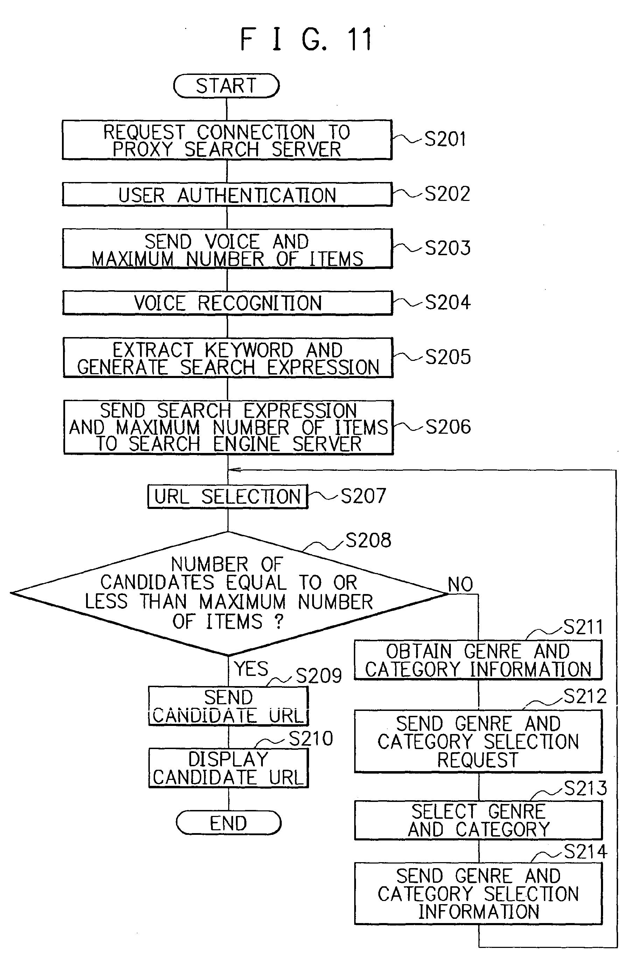

Fig. 11 shows the operation flow of terminal 100 to retrieve a URL using the proxy search server 200.

The second embodiment is almost the same as the first embodiment in the operation flow ranging from when the server 200 authenticates the user to when the server 200 establishes connection to the terminal 100 (steps S201 and S202).

When the connection is established, the controller 101 of the terminal 100 presents a message on the display 104 to request the user to input voice for the information to be retrieved and the maximum number of items. In response thereto, the user operates the operator's console 103 to input the maximum number and then inputs voice for the information from the voice input section 206. The controller 101 delivers the voice and the maximum number to the proxy search server 200 (step S203).

When the server 200 receives the voice and the maximum number from the terminal 100, the control section 201 feeds data of the voice for the information to the voice recognizing section 206. The section 206 converts the voice into character-string data by referring to voice data stored in the voice dictionary 207 (step S204). The voice recognizer 206 sends the data to the text analyzing section 202. The section 202 divides the data into morphological elements by referring to the dictionary data in the storage 205 to extract keywords therefrom and then produces a search expression according to the keyword (step S205).

Subsequent operation beginning at step S206 is similar to the operation of steps S 105 to S 113 of the first embodiment.

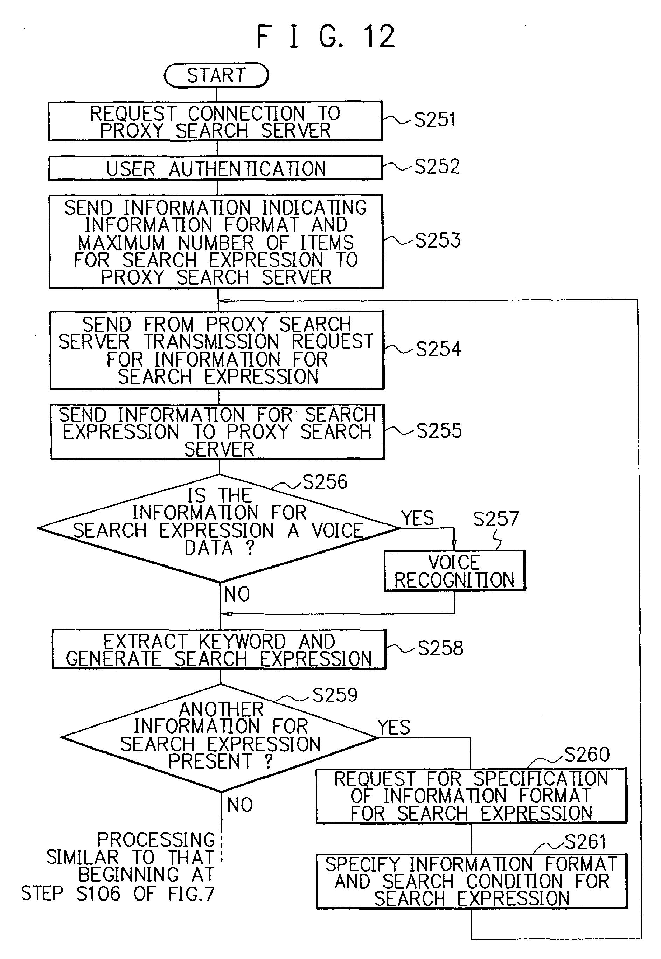

Description will next be given of another example of operation of the URL retrieval system according to the second embodiment. Fig. 12 shows another example of the flow of operation conducted by the URL retrieval system to retrieve a URL.

The flow (steps S251 and S252) of this example is almost equal to that of the first embodiment in the operation ranging from the user authentication to the setting of connection by the server 200 in steps S101 and S102 of the first embodiment.

The user of the terminal 100 operates the operating section 102 to input the maximum number of items for detection and a specification item to indicate whether the information for a search expression is sent as a character string or voice or audio data. The controller 101 transmits the information and the maximum number to the proxy search server 200 (step S253). When the server 200 receives these items, the controller 201 requests the user terminal 100 to send the information for the search expression (step S254). When the terminal 100 receives the request, the controller 101 displays on the display section 104 a message requesting an input of information for the search expression. Specifically, the message requests the user to input associated information.

If the information is specified to be sent as a character string, the user inputs the information from the operator's console 102. If the specification indicates that the information is transmitted as voice data, the user supplies the information for the search expression from the voice input section 206.

Having received the information, the controller 101 feeds the information via the internet 500 to the proxy search server 200 (step S255). When the server 200 receives the information, the controller 201 conducts, if the data is voice data (yes in step S256), a voice recognition operation for the data to convert the data into a character string (step S257). The controller 201 delivers to the text analyzing section 202 the character string from the user terminal 100 or the character string obtained by the voice recognizer 206 to extract keywords therefrom to generate a search expression using the keywords (step S258).

When the search expression is created, the controller 201 issues an inquiry to the terminal 100 whether or not any other message is present for the search expression. Having received the inquiry, the controller 101 presents the message on the display 104.

When the user selects an item using the operating section 102 to indicate that such information for the search expression is absent (no in step S259), the controller 101 sends information notifying the condition to the server 200. Having recognized the condition notified from the terminal 100, the controller 201 delivers the information indicating the maximum number of items for detection and the search expression to the search engine server 300 as in step S106 of the first embodiment. The operation thereafter is similar to that of the first embodiment.

When the user operates the operating section 102 to indicate that another information item is present for the search expression (yes in step S259), the controller 101 feeds information of the condition to the server 200. When the server 200 receives the information, the controller 201 sends information to the terminal 100 to specify a format of the information for the search expression (step S260). When the terminal receives information to specify a format, the controller 101 presents a message on the display 102 requesting the user to specify a format in which the information for the search expression is to be transmitted. The message also requests the user to indicate whether the search expression generated using the information includes an "or" condition or an "and" condition. In response to the message, when the user operates the operator's console 102 to specify the format and the condition for the search expression, the controller 101 delivers information indicating the format and the condition to the proxy search server 200 (step S261).

The processing procedure above is repeatedly executed (steps S254 to S261) until the information for the search expression is completely transmitted to the server 200.

Operation after this point is similar to that of the first embodiment.

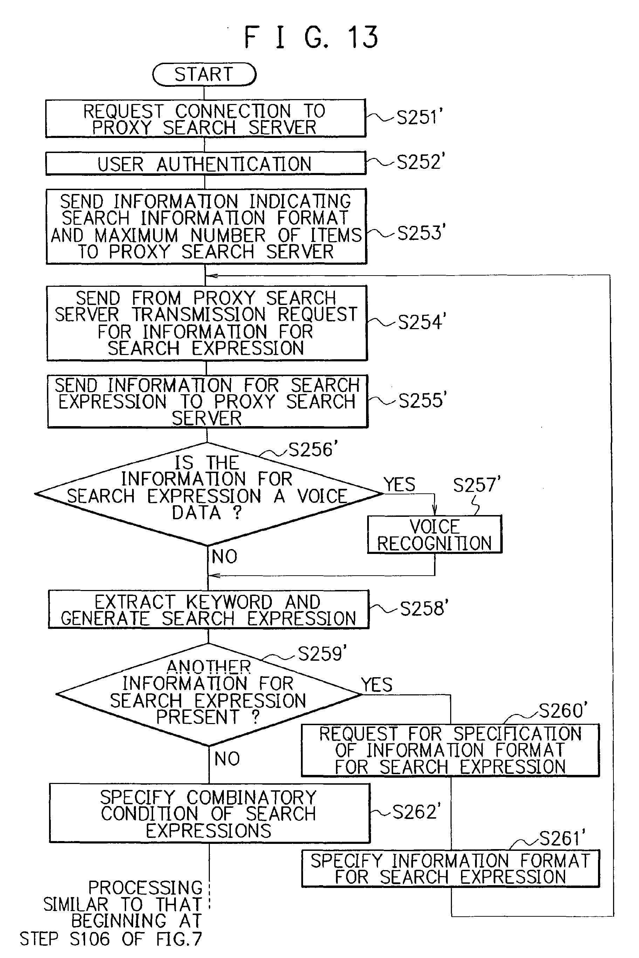

As can be seen from Fig. 13, it is also possible that after the search expressions are produced from all information items for search expressions, a combination condition is set for respective search expressions. Next, description will be given of operation in this situation. Processing of steps S251' to S259' is similar to that of steps S251 to S259 shown in Fig. 12.

After having created the search expressions using the information items for search expressions (no in step S259'), the controller 201 requests the user terminal 100 to specify combinations of respective search expressions. When the terminal 100 receives the request, the controller 101 presents on the display 104 a message requesting specification of a combination for each search expression. When the user specifies a combination for each search expression from the operating section 102, the controller 101 sends information of a condition of the combinations to the proxy search server 200. Having received the information, the controller 201 combines the search expressions according to the condition from the terminal 100. The controller 201 transmits to the search engine server 300 the search expressions combined as indicated by the condition specified by the user to request an URL retrieval. Processing thereafter is similar to that of the first embodiment beginning at step S 106.

In the embodiment, audio data can be supplied as the information for a search expression. Therefore, the user is not required to input a search text from the operator's console 102. Consequently, even if the user is not familiar with operation of the console 102 or even if the operating section 102 is a device such as a pointing device not suitable to input a sentence or a text, the user can readily input information for the search expression.

Even when the correct spelling of a word of a language other than Japanese or the correct Chinese character of a word is unknown, a keyword can be extracted only if its pronunciation is known.

As described above, in the embodiment of the URL retrieval system, the user is not required to assume a keyword for information to be accessed. Even when many uniform resource locators are selected as a result of a search, it is not necessary for the user of the user terminal to select therefrom uniform resource locators associated with the information. Thus, even if the user is not fully familiar with the retrieval operation, it is possible for the user to easily obtain URL associated with the information to be accessed.

### Third embodiment

Description will now be given of a third embodiment of the invention. Like the first embodiment, the embodiment of the URL retrieval system includes a user terminal 100, a proxy search server 200, and a search engine server 300. The embodiment also includes an internet 500 to connect the constituent components to each other.

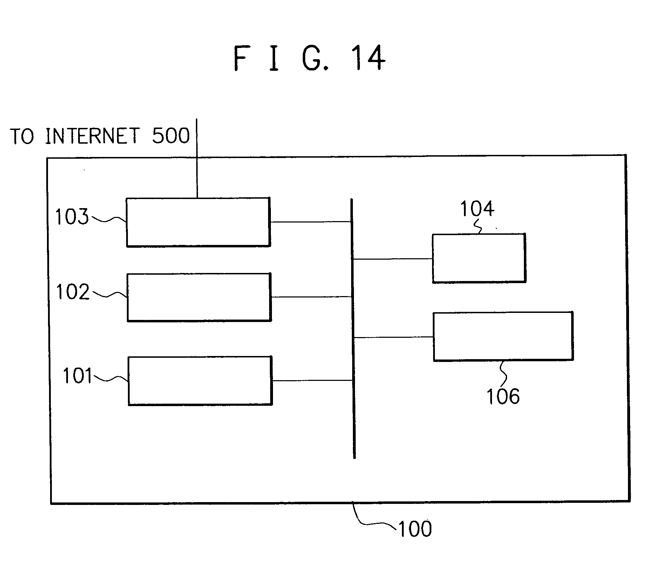

Fig. 14 shows that the terminal 100 is similar to that of the first embodiment excepting that an image input section 106 is disposed therein. The section 106 includes devices to generate image data such as a scanner and/or digital camera. The section 106 may also include a device to produce image data from signals of image data recorded on an information recording medium.

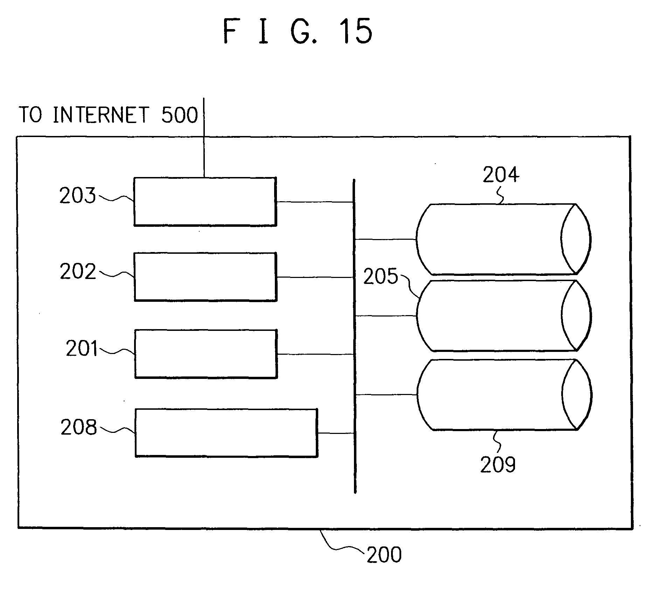

Fig. 15 shows that the proxy search server 200 in the third embodiment is similar to that of the first embodiment excepting that an image recognizing section 208 and an image dictionary 209 are arranged therein.

The dictionary 209 stores feature data such as a contour and a hue of an image and morphological elements with a relationship established there-between. For example, the dictionary 209 stores feature data "contour of a car" and "car" with a correspondence there-between.

The image recognizing section 208 has a function to extract feature data from image data and selects from information stored in the image dictionary 209 information items matching the feature data to resultantly convert the image data into character-string data.

The search engine server 300 is substantially the same as that of the first embodiment.

Description will be given of operation of the URL system to search a URL in the embodiment.

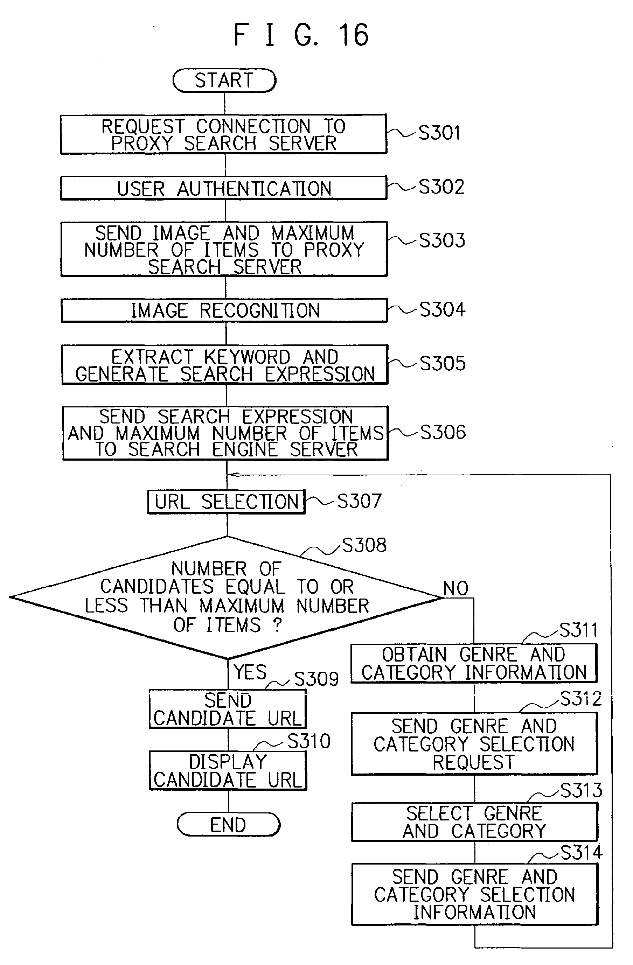

Fig. 16 shows a flow of operation when the URL retrieval system conducts a URL retrieval.

The flow of operation from the user authentication to the setting of connection (steps S301 and S302) by the server 200 is almost equal to that in steps S101 and S102 of the first embodiment.

When the connection to the server 200 is established, the controller 101 of the user terminal 100 presents a message on the display 104 requesting the user to input an image for the information to be retrieved and the maximum number of items for extraction. When the user responsively inputs the maximum number from the operator's console (operating section) 102 and an image associated with the information from the image input section 207, the controller 101 delivers the image and the maximum number to the server 200 (step S303).

When the server 200 receives the image and the maximum number from the terminal 100, the control section 201 feeds image data for the information to the image recognizer section 208. The section 208 converts the image data into character-string data by referring to feature data stored as images in the image dictionary (step S304). The image recognizer 208 then sends the character-string data to the text analyzing section 202. Subsequent operation beginning at step S305 is similar to that beginning at step S305 of the first operation example of the second embodiment.

The embodiment of the URL retrieval system can also execute processing similar to that of the second operation example of the second embodiment. That is, the user of the terminal 100 may select whether the information for the search expression is sent as an image or a character string to the server 200.

Since an image can be supplied as the information for the search expression, the user is not required to input a search text from the console section 102. Therefore, even when the user is not versed in operation of the console 102 or even when the section 102 is a device such as a pointing device not suitable to input a sentence, the user can appropriately input the information for the search expression at a high speed.

Additionally, even when the information is obscure in its title and in the way how to write it, it is possible, only if an image is attainable, to extract a keyword using the image.

As above, in the URL retrieval system according to the embodiment, it is not required for the user to assume a keyword for information to be accessed. Furthermore, even when many URL are obtained by the search, the user is not required to select therefrom uniform resource locators related to the information. In consequence, even a user not familiar with the search operation can easily acquire URL associated with information to be accessed.

### Fourth embodiment

Description will next be given of a fourth embodiment. Like the first embodiment, the fourth embodiment of the URL retrieval system also includes a user terminal 100, a proxy search server 200, a search engine server 300, and an internet 500 connecting the constituent components to each other.

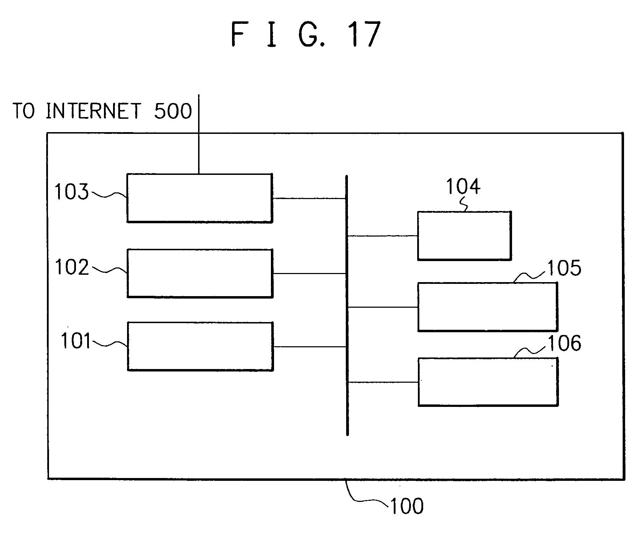

Fig. 17 shows a configuration of the user terminal 100 in the fourth embodiment. The terminal 100 includes a voice input section 105 and an image input section 106 in addition to the constituent components of the user terminal 100 of the first embodiment. The section 105 is similar to that of the second embodiment and the section 106 is almost the same as that of the third embodiment.

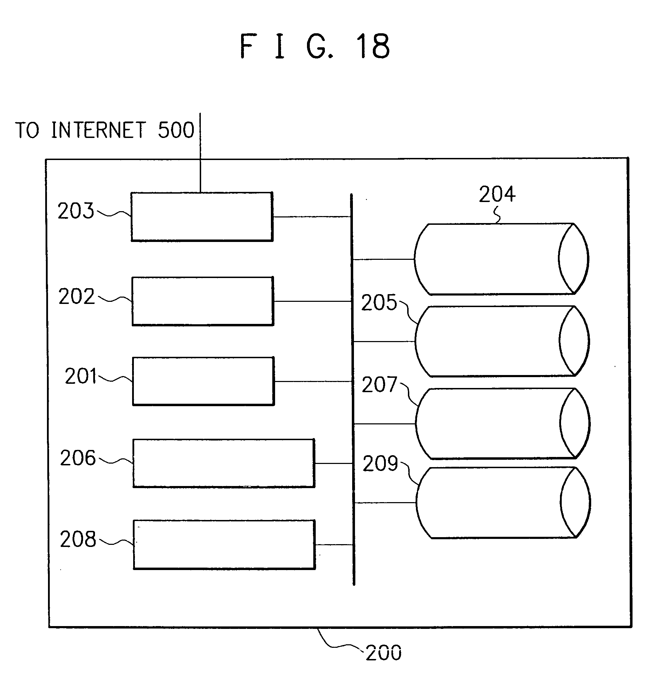

Fig. 18 shows a construction of the proxy search server 200 in the fourth embodiment. When compared with the first embodiment, the server 200 additionally includes a voice recognizing section 206, a voice dictionary 207, an image recognizing section 208, and an image dictionary 209. The voice recognizing section 206 and the voice dictionary 207 are substantially the same as those of the second embodiment. The image recognizing section 208 and the image dictionary 209 are almost equal to those of the third embodiment.

Description will now be given of operation of a URL retrieval in the URL retrieval system of the embodiment.

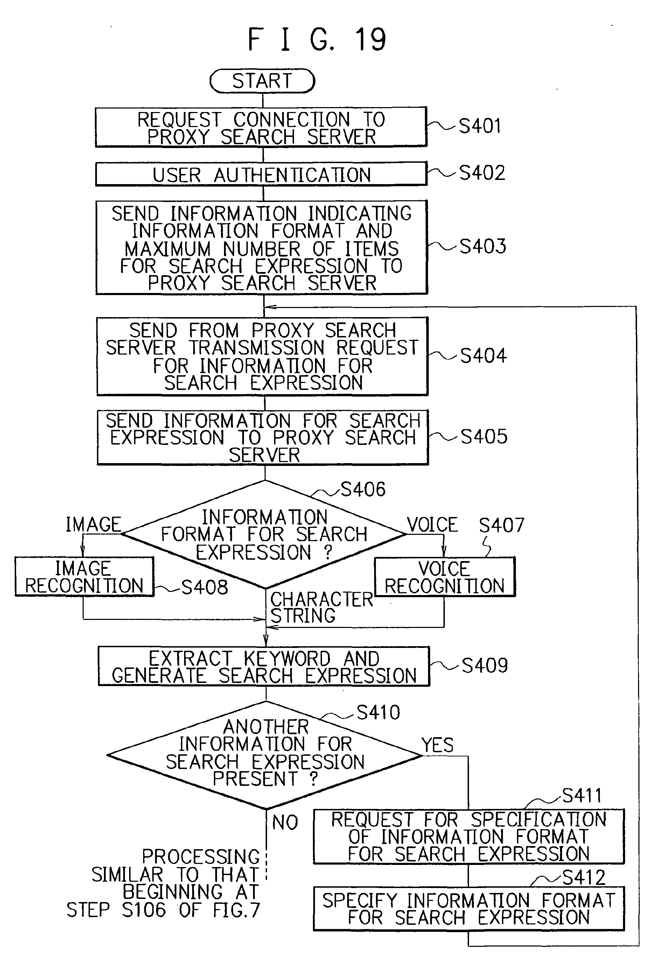

Fig. 19 shows a flow of operation for the URL retrieval system to retrieve a URL in the fourth embodiment.

The flow of processing from when the server 200 authenticates the user to when the server 200 establishes connection to the terminal 100 (steps S401 and S402) is similar to that of processing in steps S251 and S253 of the second operation example of the second embodiment.

When the user operates the operating section 102 to input the maximum number and an indication whether the information for the search expression is sent as a character string, voice data, or image data. The control section 201 sends the information indicating the format for transmission and the information for the search expression to the proxy search server 200 (step S403). When the server 200 receives the information items, the controller 201 requests the terminal 100 to transmit the information for the search expression (step S404). When the terminal 100 receives the request, the controller 101 displays on the display 104 a message requesting the user to input the information.

If it has been specified to send the information as a character string, the user inputs the information from the console 102 to send the information to the terminal 100. If it has been specified to send the information as voice data, the user inputs the information from the voice input section 105. If it has been specified to send the information as an image, the user inputs the information from the image input section 106 in the same way as above.

Having obtained the information, the controller 101 delivers the information via internet 500 to server 200 (step S405). When the server 200 receives the information for the search expression, the controller 201 converts, if the data is voice data ("voice" in step S406), the voice data into a character string (step S407). If the information is image data ("image" in step S406), the controller 201 conducts image recognition to convert the data into a character string (step S408). The controller passes the character string converted by the voice recognizer 206 or the image recognizer 208 to the text analyzer 202 to extract keywords to resultantly create a search expression (step S409).

Operation steps S410 to S412 are almost equal to steps S259 to S261 of the second embodiment.

The controller 201 repeatedly carries out the procedure (steps S404 to S412) until all information items for search expressions are delivered to the proxy search server 200. After all information items are transmitted to the server 200, operation is substantially the same as that of the first embodiment.

Since voice data or image data can be inputted as the information for the search expression, it is not necessary for the user to input a search text from the operating section 102. Consequently, even when the user is not familiar with operation of the user's console 102 or even when the console 102 is a device such as a pointing device not appropriate to input a text, the user can easily input the information for the search expression in a short period of time.

Furthermore, the information for the search expression may be either one of a character string, voice data, and an image, and it is also possible to combine these items. Therefore, any user not versed in the retrieval operation can correctly detect a desired URL.

As described above, in the URL retrieval system according to the embodiment, the user is not required to assume a keyword associated with information to be accessed. In addition, even when a lot of URL are attained by the search, it is not necessary for the user to select uniform resource locators related to the information from the URL resultant from the search. In consequence, even if a user is not familiar with the search operation, the user can easily obtain URL associated with information to be accessed.

### Fifth embodiment

Description will now be given of a fifth embodiment of the invention. This URL retrieval system is similar to the first embodiment and includes a user terminal 100, a proxy search server 200, and a search engine server 300. The embodiment further includes internet 500 connecting the constituent components to each other.

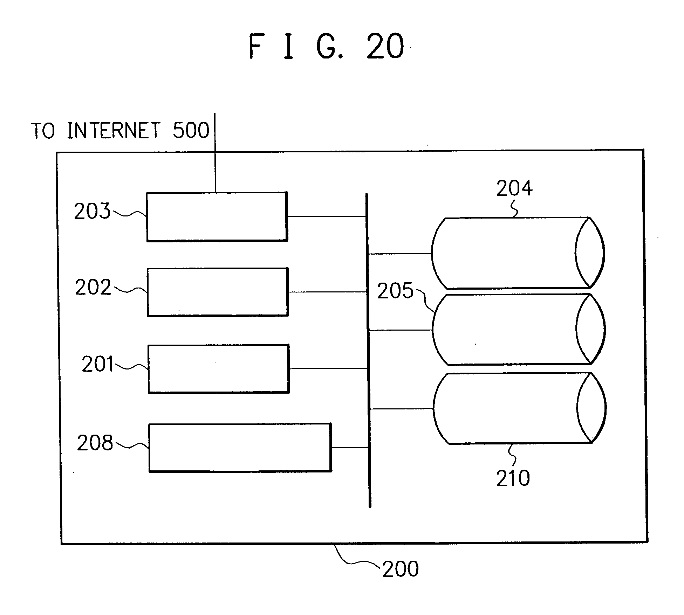

In Fig. 20 the construction of the proxy search server 200 having a configuration similar to that of the first embodiment includes a genre and category information storage 210 in addition to proxy search server 200 of the first embodiment.

The storage 210 stores information indicating hierarchic structure of data in the URL database 304 of the search engine server 300.

Description will now be given of operation in which the URL retrieval system conducts a URL retrieval in the embodiment.

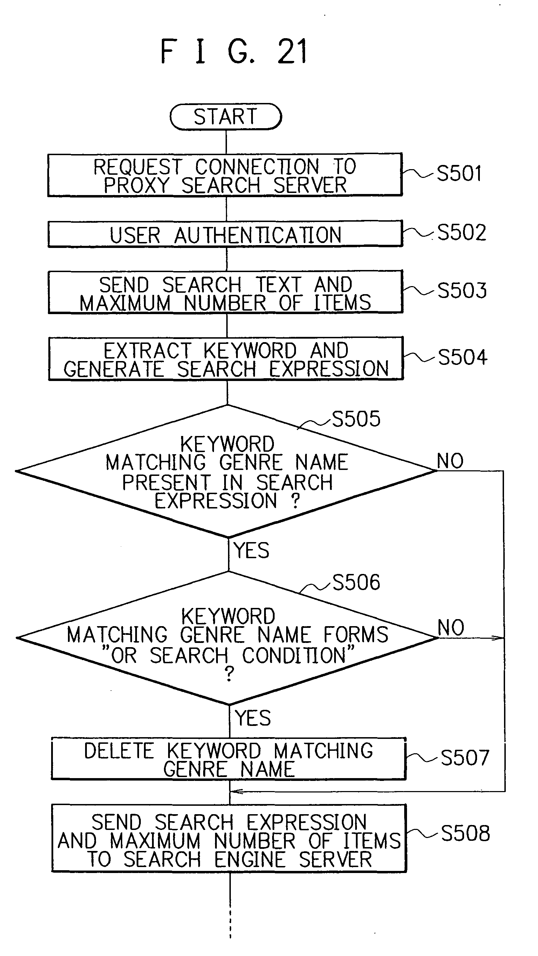

Fig. 21 shows a flow of operation of the URL retrieval system in the URL retrieval. The processing flow from step S501 to step S504 is similar to that of step S101 to S104.

When the text analyzer 202 generates a search expression, the controller 201 makes a check by referring to the information stored in the genre and category information storage 210 to determine whether or not the search expression includes a keyword matching "genre" (step S505).

If the expression includes such a keyword (yes in step s505), the controller makes a check to determine whether or not the keyword alone becomes a parameter of "or search" (step S506). If the keyword is a parameter of "or search" (yes in step S506), the controller 201 deletes the keyword from the search expression (step S507). If each of the keywords matches a genre name and becomes by itself an "or search" condition, the controller 21 requests the user terminal 100 to transmit another search text.

When none of the keywords obtained by the text analyzer 202 matches a genre name (no in step S505) or when the search expression includes a keyword matching a genre name and the keyword does not become by itself a parameter of an "or search" (no in step S506), all keywords are used in the search expression.

The controller 201 then transmits the search expression to the search engine server 300 (S508). Subsequent operation is almost the same as the operation beginning at step S 106 of the first embodiment.

When the URL retrieval is carried out using a keyword matching a genre name as a single parameter of an "or search", it is highly possible to obtain a large number of URL. However, in the URL retrieval system of the embodiment, when a keyword matching a genre name is detected as a result of the text analysis, the keyword is not used as a single parameter of an "or search". This even prevents the URL retrieval using a search expression, the search range of which would have to be narrowed (reduced) later.

In the description of the example, when a keyword matching a genre name is included as a single parameter of an "or search" in a search expression, the keyword is deleted from the expression. However, when a keyword matching a genre name becomes an "or" condition by itself, it is also possible to obtain a large number of URL. Therefore, also when such a keyword is detected, the processing described above may be executed.

In this fashion, it is not required in the URL retrieval system according to the embodiment for the user to assume a keyword corresponding to information to be accessed. Additionally, it is possible to avoid execution of a URL retrieval under a condition in which a lot of URL are detected. Moreover, even when a large number of URL are obtained by the search, the user is not required to select uniform resource locators related to the information from the URL obtained by the search. Consequently, any user not familiar with the search operation can easily acquire URL associated with information to be accessed.

### Sixth embodiment

Description will now be given of a sixth embodiment of the invention. Like the first embodiment, the URL retrieval system includes a user terminal 100, a proxy search server 200, a search engine server 300, and an internet 500 connecting the constituent components to each other.

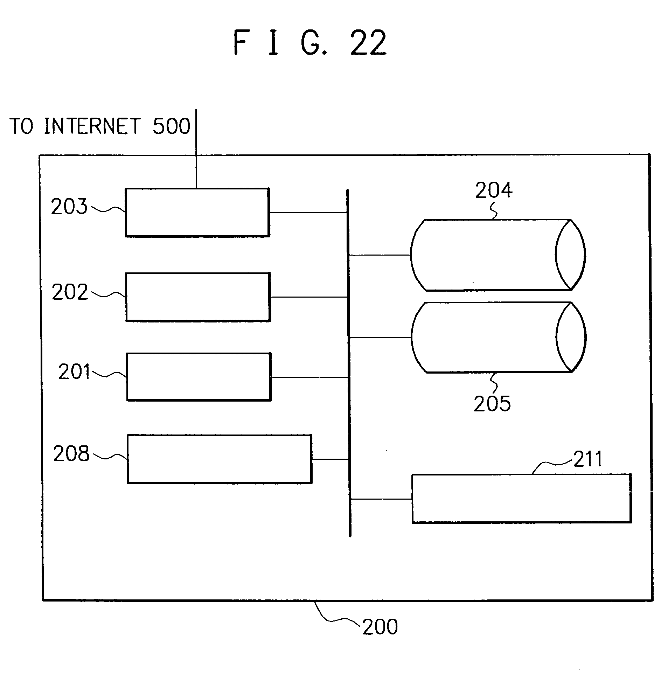

Fig. 22 shows a configuration of the proxy search server 200 which includes a search expression storage 211 in addition to the constituent components of proxy search server 200 of the fourth embodiment.

The storage 211 stores a search expression to be sent to the search engine server 300.

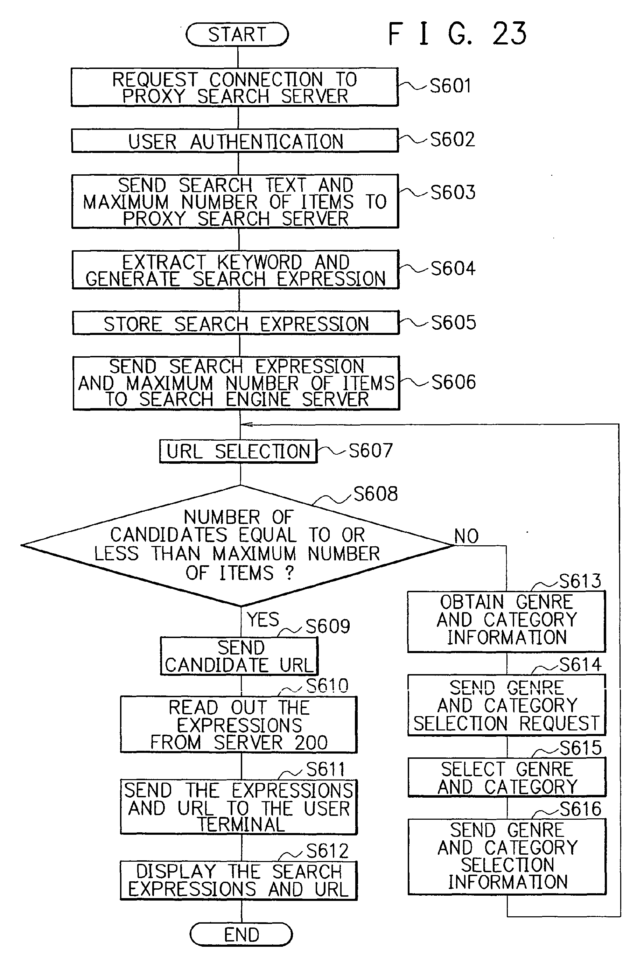

Fig. 23 shows an operation flow of the URL retrieval system to retrieve a URL in the sixth embodiment.

Processing from step S601 to step S609 to extract a keyword in the server 200 is similar to that of steps S401 to S409 of the fourth embodiment. When the text analyzer 202 extracts keywords from search data received from the user terminal 100, the controller 201 generates a search expression using the keywords and stores the expression in the search expression storage 211 (step S605). The controller 201 also sends information indicating the maximum number of items for detection and the search expression to the server 300 (step S606).

Subsequent processing to extract URL from the information in the URL data base 304 according to the maximum number of items (steps S607 and 608 and steps S613 to S616) is substantially equal to the processing of steps S106 and S107 and steps S111 to S 115 of the first embodiment.

After having obtained URL from the information of the database 304 as above, the controller 301 delivers the URL to the server 200 (step S609).

When the server 200 receives the URL from the server 300, the controller 201 reads search expressions from the storage 211 (step S610). The controller 201 sends the URL from the server 300 and the expressions attained from the storage 211 to the user terminal 100 (step S611). When the terminal 100 receives the URL and the expressions from the server 200, the controller 101 displays the URL and the search expressions as a retrieval result on the display 104 (step S612).

When the information for the search expression is voice data or an image, it may occur that it is not possible that a keyword associated with information desired by the user is extracted from the voice data or the image. When the information is, for example, voice data, it is possible to recognize by mistake phrases which are equal in pronunciation to each other and which differ in characters. When the information is, for example, an image, it is possible that another image having an appearance analogous to that of the pertinent image is by mistake recognized as the pertinent image. If a keyword not expected by the user is selected from the voice data or the image, it is not possible that a URL associated with the information to be accessed by the user is obtained through the keyword search. In this case, if only the URL thus extracted are presented as a retrieval result to the user, the user may possibly recognize the wrong result that URL related to the desired information are absent even when such URL are present.

In the embodiment, since the search expressions and the URL detected by the retrieval are notified to the user terminal 100, the user can recognize the search expressions employed to extract the URL. Therefore, when the resultant URL are extracted using keywords not expected by the user, the user can retrieve appropriate URL corresponding to desired information by changing the information for the search expression. As a result, any user not versed in the retrieval operation can easily attain URL associated with the information to be accessed.

The embodiments have been described only as examples in accordance with the present invention. The present invention is not restricted by the embodiments.

For example, in the description of the example, the proxy search server 200 and the search engine server 300 are mutually separated units and are connected via the internet. However, it is also possible in a configuration that the server 200 is linked via an intra-server network such as a local area network (LAN) to the server 300. In this situation, an interface module for the LAN may be separately arranged in addition to the transceiver section connected to the internet. In accordance with the invention, the proxy search server 200 and the search engine server 300 may be configured in one unit to serve the function described above, as well.

The URL database 400 may be integrally arranged in the search engine server 300 as in the above embodiment or may be separated from the server 300.

The user terminal 100 may be coupled via wired or wireless communication with the internet 500. The user terminal 100 may be a mobile terminal linked with a mobile communication network, a computer terminal connected to a wireless LAN or the internet, or any other terminal. That is, the terminal 100 may be a terminal of any type.

### Various modifications are possible.

As can be seen from the description, there are provided in accordance with the invention a URL retrieval system and a URL retrieval method in which it is not required for the user to assume a keyword corresponding to information to be accessed. Furthermore, even when a large number of URL are obtained by the search, the user is not required to select uniform resource locators associated with the information from the URL obtained by the search.

While the invention has been described with reference to the particular illustrative embodiments, it is not to be restricted by those embodiments but only by the appended claims. It is to be appreciated that those skilled in the art can change or modify the embodiments without departing from the scope and spirit of the invention.

## Claims

1. A uniform resource locator (URL) retrieval system, comprising:
a user terminal capable of communicating information via an internet;
a URL database storing, in a hierarchic configuration, URL indicating locations of information opened to the public on the internet and keywords of the respective URL with a correspondence established between the URL and the keywords;
a searching unit for extracting, from the URL stored in the URL database, a URL matching a search expression;
a server for requesting a retrieval of URL to the searching unit in response to a request from the user terminal and notifying a result of the retrieval to the user terminal; and
internet means connecting the user terminal, the URL database, the searching unit, and the server to each other, wherein
the user terminal comprises:
means for transmitting information for a search expression to the server; and
means for requesting the server to notify URL associated with the information as a result of a retrieval, the number of the URL being equal to or less than a maximum number,
the server comprises:
means for extracting keywords from the information received from the user terminal and creating a search expression using the keywords;
means for requesting the searching unit to retrieve URL matching the search expression;
means for sending information indicating the maximum number to the searching unit;
means for requesting the user terminal to select at least one of items of a hierarchic level indicated by hierarchic level information received from the searching unit;
means for transmitting to the searching unit hierarchic level selection information indicating the hierarchic level selected by a user operating the user terminal; and
means for notifying a retrieval result from the searching unit to the user terminal and
the searching unit comprises:
means for creating, when the number of URL extracted according to the search expression received from the server exceeds the maximum number, the hierarchic level information indicating for each of the URL a hierarchic level to which the URL belongs and transmitting the hierarchic level information to the server; and
means for selecting, from the URL extracted according to the search expression received from the server, URL belonging to the hierarchic level indicated by the hierarchic level selection information.

2. A URL retrieval system in accordance with claim 1, wherein the searching unit transmits again hierarchic level information to the server when the number of the URL belonging to the hierarchic level indicated by the hierarchic level selection information exceeds the maximum number.

3. A URL retrieval system in accordance with claim 1 or 2, wherein the server notifies the search expression together with the result of the retrieval to the user terminal.

4. A URL retrieval system in accordance with one of claims 1 to 3, wherein:
the server further comprises storage means having stored information indicating a hierarchic configuration of the URL database; and
when a keyword matching a name of a highest hierarchic level of the URL database is included as a single item of an or condition in the search expression, the server removes the keyword from the search expression.

5. A URL retrieval system in accordance with one of claims 1 to 4, wherein:
the server further comprises audio recognizer means for converting audio data into character-string data; and
when the information for a search expression is received as voice data from the user terminal, the audio recognizer means converts the audio data into character-string data and then the server extracts keywords from the information.

6. A URL retrieval system in accordance with one of claims 1 to 5, wherein:
the server further comprises image recognizer means for converting image data into character-string data; and
when the information for a search expression is received as image data from the user terminal, the image recognizer means converts the image data into character-string data and then the server extracts keywords from the information.

7. A server for use with a URL retrieval connected via an internet to a user terminal for requesting a retrieval of URL to the searching unit in response to a request from the user terminal and notifying a result of the retrieval to the user terminal, comprising:
a URL database storing, in a hierarchic configuration, URL indicating locations of information open to the public on the internet and keywords of the respective URL with a correspondence established between the URL and the keywords;
means for receiving, from the user terminal, information for a search expression and a maximum number associated with the information;
means for extracting keywords from the information received from the user terminal and creating a search expression using the keywords;
search means for extracting, from the URL stored in the URL database, URL matching the search matching the search expression;
means for creating, when the number of URL extracted by the search means according to the search expression exceeds the maximum number, hierarchic level information indicating for each of the URL a hierarchic level to which the URL belongs;
means for requesting the user terminal to select at least one of items of a hierarchic level indicated by hierarchic level information;
means for obtaining from the user terminal hierarchic level selection information indicating the hierarchic level selected by a user operating the user terminal;
means for selecting, from the URL extracted according to the search expression received from the server, URL belonging to the hierarchic level indicated by the hierarchic level selection information; and
means for notifying, when the number of URL extracted by the search means according to the search expression is equal to or less than the maximum number, the URL extracted by the search means as a result of the retrieval to the user terminal and notifying, when the number of URL extracted by the search means according to the search expression exceeds the maximum number, the URL belonging to the hierarchic level indicated by the hierarchic level selection information as a result of the retrieval to the user terminal.

8. A server in accordance with claim 7, wherein when the number of the URL belonging to the hierarchic level indicated by the hierarchic level selection information exceeds the maximum number, the server requests the user to select at least one of items of a hierarchic level indicated again by hierarchic level information.

9. A server in accordance with claim 7 or 8, wherein the server notifies the search expression together with the result of the retrieval to the user terminal.

10. A server in accordance with one of claims 7 to 9, further comprising storage means having stored information indicating a hierarchic configuration of the URL database, wherein
when a keyword matching a name of a highest hierarchic level of the URL database is included as a single item of an or condition in the search expression, the server removes the keyword from the search expression.

11. A server in accordance with one of claims 7 to 10, further comprising audio recognizer means for converting audio data into character-string data, wherein
when the information for a search expression is received as voice data from the user terminal, the audio recognizer means converts the audio data into character-string data and then the server extracts keywords from the information.

12. A server in accordance with one of claims 7 to 11, further comprising image recognizer means for converting image data into character-string data, wherein
when the information for a search expression is received as image data from the user terminal, the image recognizer means converts the audio data into character-string data and then the server extracts keywords from the information.

13. A URL retrieval method for use with a system comprising a user terminal capable of communicating information via internet, a URL database storing, in a hierarchic configuration, URL indicating locations of information opened to the public on the internet and keywords of the respective URL with a correspondence established between the URL and the keywords, a searching unit for extracting, from the URL stored in the URL database, URL matching a search expression; a server for requesting a retrieval of URL to the searching unit in response to a request from the user terminal and notifying a result of the retrieval to the user terminal, and internet means connecting the user terminal, the URL database, the searching unit, and the server to each other, the method comprising the steps of:
transmitting information for a search expression from the user terminal to the server;
requesting, by the user terminal, the server to notify URL associated with the information as a result of a retrieval, the number of the URL being equal to or less than a maximum number;
extracting, by the server, keywords from the information received from the user terminal and creating a search expression using the keywords;
requesting, by the server, the searching unit to retrieve URL matching the search expression;
sending, by the server, information indicating the maximum number to the searching unit;
extracting by the searching unit, from the URL stored in the URL database, URL matching the search expression received from the server;
making a check by the searching unit to determine whether or not the number of the URL extracted according to the search expression exceeds the maximum number;
creating by the searching unit, when the number of URL extracted according to the search expression received from the server exceeds the maximum number, hierarchic level information indicating for each of the URL a hierarchic level to which the URL belongs and transmitting the hierarchic level information to the server;
requesting, by the server, the user terminal to select at least one of items of a hierarchic level indicated by the hierarchic level information received from the searching unit;
transmitting, by the server to the searching unit, hierarchic level selection information indicating the hierarchic level selected by the user terminal;
selecting by the searching unit, from the URL extracted according to the search expression received from the server, URL belonging to the hierarchic level indicated by the hierarchic level selection information;
sending by the searching unit the URL of which the number is equal to or less than the maximum number as a result of the retrieval to the server; and
notifying by the server the result of the retrieval to the user terminal.

14. A URL retrieval method in accordance with claim 13, further comprising the step of transmitting by the searching unit again hierarchic level information to the server when the number of the URL belonging to the hierarchic level indicated by the hierarchic level selection information exceeds the maximum number.

15. A URL retrieval method in accordance with claim 13 or 14, further comprising the step of notifying by the server the search expression together with the result of the retrieval to the user terminal.

16. A URL retrieval method in accordance with one of claims 13 to 15, wherein the server further includes storage means having stored information indicating a hierarchic configuration of the URL database, the method further comprising the step of removing by the server, when a keyword matching a name of a highest hierarchic level of the URL database is included as a single item of an or condition in the search expression, the keyword from the search expression.

17. A URL retrieval method in accordance with one of claims 13 to 16, wherein the server further includes audio recognizer means for converting audio data into character-string data, the method further comprising the step of converting by the audio recognizer means, when the information for a search expression is received as voice data from the user terminal, the audio data into character-string data and extracting thereafter the keywords from the information.

18. A URL retrieval method in accordance with one of claims 13 to 17, wherein the server further includes image recognizer means for converting image data into character-string data, the method further comprising the step of converting by the image recognizer means, when the information for a search expression is received as image data from the user terminal, the image data into character-string data and extracting thereafter the keywords from the information.
